# EUROPEAN PATENT SPECIFICATION

(11) **EP 0 561 955 B1**
(45) Date of publication and mention of the grant of the patent: **21.09.1994**
(21) Application number: 92901491.8
(22) Date of filing: 10.12.1991
(51) Int. Cl.: A62D 3/00, B01D 11/02, B03B 9/02

(54) **A METHOD OF CONTINUOUSLY DECONTAMINATING A MATERIAL, AND AN ASSEMBLY FOR CARRYING OUT THE METHOD**
VERFAHREN ZUR KONTINUIERLICHEN DEKONTAMINIERUNG EINES MATERIALS, UND VORRICHTUNG UM DAS VERFAHREN AUSZUFÜHREN
PROCEDE DE DECONTAMINATION CONTINUE D'UN MATERIAU ET MONTAGE PERMETTANT DE REALISER CE PROCEDE

(30) Priority: 10.12.1990 DK 2929/90
(43) Date of publication of application: 29.09.1993
(73) Proprietor: AS PHONIX CONTRACTORS, 6600 Vejen (DK)
(72) Inventor: SOGAARD, Dennis, DK-5700 Svendborg (DK)
(74) Representative: Zeuthen-Aagaard, Henrik
(86) International application number: DK9100389
(87) International publication number: WO9210239

(56) References cited:
- EP-A- 0 323 649
- DE-A- 3 610 199
- DE-A- 3 726 282
- GB-A- 1 371 238
- US-A- 4 120 775
- US-A- 4 532 024
- US-A- 4 606 774
- Patent Abstract of Japan, Vol.12, no.364,M747, abstract of JP 63-117813,publ 1988-05-21 (Okawara MFG CO LTD)

## Description

### Technical Field

The present invention relates to a method of continuously decontaminating a material, such as soil, sand, stone, drilling materials and the like materials, where the material passes a charging sluice into a closed system, is extracted counterstream by means of an extractant in an extraction section including one or more extraction pipes provided with worm conveyors, is subjected to a steam stripping in a steam stripping section for removal of the extractant, and leaves the closed system through a discharging sluice.

The invention also relates to an assembly to be used for carrying out the method.

### Background Art

Over the last years mankind has become increasingly aware of the environmental consequences of the methods that are and have been used for the disposal of waste materials.

An example within the offshore industry of the above increasing attention is that in near future Norway intends to prohibit dumping of oil-containing drilling mud including the mineral material drilled out, with the result that it is necessary to decontaminate the drilling mud. Existing methods decontaminate the material by way of heating. Such methods are, however, highly energy-consuming and involve problems in particular when a heating at high temperatures is neither desired nor acceptable in view of the danger of fire and explosion.

Today several cases are known where contaminated areas have been discovered, for instance during the excavation of a building site, where an old waste deposit has been revealed. A common method used today to remove such contaminations comprises excavating the entire amount of contaminated soil. The excavated material is sent to a specialized incinerator plant, such as Kommunekemi in Denmark. Here the entire material is incinerated with addition of fuel ensuring a high incineration temperature. It is necessary to operate with a high incineration temperature since lower temperatures result in a generation of dioxines which are generally known to be extremely toxic. This method is, of course, very difficult because the excavating procedure, the transportation and the succeeding sorting and controlled charging into the incinerator involve much and dangerous work. Transporting large amounts of material is very cost-intensive and the capacity of the incinerator plant must be considerable. In addition, the re-establishment of the place of origin of the contaminated material involves much work. In practice, it is almost impossible to return the material to the place of excavation, partly because of the transport costs involved and partly because such a return would require a further technical treatment of ash and slag material remaining after the incineration.

The above method is cost-intensive since the amount of contaminated material to be excavated and transported is often large. A further problem connected with the incineration is that the contaminated material is often very heterogenous and may result in heavy wear of the plant, for instance in case of brickwork in a rotor incinerator. Another problem is how to control the incineration of the heterogenous waste, which often comprises for instance tar residues, phenolic compounds and frequently rather large amounts of polyaromatic hydrocarbons. To ensure that no poisonous materials, such as dioxines, escape together with the smoke, the incineration has to be made under very stationary conditions. It is, however, very difficult and expensive to ensure a stationary incineration of the heterogenous materials in question.

For minor contaminations a temporary method is presently used where the disposal costs can be reduced. In this method a controlled deposit is created in form of an excavation provided with a sealing membrane onto which the contaminated material is deposited. With such a deposit it is necessary to collect, examine and, if necessary, to treat the rainwater seeping through the material. Accordingly, the deposit must be constantly observed, often over a period of many years.

It is also known to remove contaminants merely by heating the soil, whereby all the contaminants are not, however, removed. When the material for instance contains high-molecular chlorinated compounds, such as PCB, chlorinated paraffines etc., a moderate heating, i.e. already at temperatures below 500°C, can cause a partial decomposition of such compounds. The resulting decomposed products may have a negative effect on the environment, as they may be highly toxic, and such an environmental effect may exceed the effect on the environment of the original contaminants. In addition, a strong heating of contaminated material, such as contaminated drilling material within the offshore industry, is not desired due to the risk of fire and explosion.

It is furthermore known to biologically remove contaminants, which, however, is a very time-consuming process. In addition, it is only possible to use biological methods in case of slightly oil-contaminated materials. In case of contamination by heavy metals and other substances that can accumulate in organisms, biological decontamination results in a later secretion of the heavy metals and other substances. As a result, the contaminants are only transferred to an organism rather than being completely removed. Biological methods for fighting pollution demand considerable space and depend on various variables, such as the type of pollution as well as temperature and humidity conditions.

Danish printed accepted application No. 161,670 (and the corresponding European Publication No. 0 323 649) discloses a method of decontaminating material, such as soil, said method comprising the steps of
charging the material into a container having means for introducing and distributing steam and liquid as well as means for removing fluids,
introducing steam and removing fluids including steam, water, air and some contaminants,
extracting the material by introducing an extractant and removing the remaining water, extractant and contaminants,
stripping the decontaminated material with steam, and
removing the decontaminated, dry or slightly humid material from the container.

In this known method, the extraction can be performed in one or more steps, where an amount of extractant is used in each step. The extractant circulates in a cycle where it is preferably continuously freed of water, and where the extractant is transferred after each step to another container with contaminated material or is purified for re-use. In this manner the extraction can be performed while continuously purifying and re-using the extractant. A particularly suited extractant is a volatile and water-insoluble solvent or solvent mixture of a specific gravity deviating considerably from, preferably higher than, the one of water. An example of such an extractant is for instance carbodisulphide or a halogenated hydrocarbon, preferably methylene chloride. A particular feature of the known method is that the soil to be decontaminated is transferred to a container and remains therein until it has been completely treated and is ready to be returned to the place of excavation.

The method described in Danish printed accepted application No. 161,670 turned out to be suited for removing extractable substances, water-soluble substances, steam-distillable substances as well as distillable and/or swellable water-insoluble substances in a simple manner requiring only a low energy consumption, and where none of the fluids used are disposed of in the environment.

In case of large amounts of contaminated material, the method described in Danish printed accepted application No. 161,670 has an insufficient capacity, and the method would involve a relatively extensive use of extractant. Accordingly, a demand exists for a continuous method comprising only one operation. The method must nevertheless be relatively simple with respect to the equipment used for decontaminating the material to the same extent as the method of Danish printed accepted application No. 161,670. In addition, the method must be suited for decontaminating large amounts of material containing high amounts of contaminants in an inexpensive an resource-saving manner.

The present invention relates to a further development of the method known from the above Danish printed accepted application No. 161,670, where the extraction of the contaminated material is performed by a continuous counterstream extraction.

The use of counterstream extraction for decontaminating soil in a closed extraction container with a charging sluice and a discharging sluice is suggested by Wächter and Wessling in German Offenlegungsschrift No. 36 10 199. The latter publication discloses a method of continuously decontaminating soil by counterstream extraction using a solvent circulating in a closed circuit as extractant. The dissolved contaminants are separated from the extractant in the closed circuit. The extraction may be carried out in an extractor provided with means for transporting the soil. The type of such means is not disclosed.

A substantial condition for performing a continuous counterstream extraction in an efficient manner is that it is possible to feed a flow of the contaminated material counterstream the extractant under conditions allowing said extractant to flow sufficiently freely about the material without causing portions of said extractant to flow in the wrong direction. According to the ideal conditions, the extractant flow as a so-called plug flow, which has been described in greater detail by J.C. Lee under item "1. Reactor design - general principles" in Chemical Engineering, Vol. 3, 2. Ed., page 46 to page 71 (J.M. Coulson and J.F. Richardson editors, Pergamon Press, Oxford, 1979, 1982 and 1987.

It is known to use conventional worm conveyors in connection with decontaminating a material, such as soil, by means of an extractant. Such uses are for instance described by Morris in US-PS No. 4,606,774, by Wächter and Roland in DE-PS No. 36 10 113, by Dragievi in WO publication No. 90/10484, by Haschke et al. in US-PS No. 4,532,024, by Murray et al in US-PS No. 4,120,775, as well as by Kresken in DE Offenlegungsschrift No. 37 26 282. When using a conventional worm conveyor, the extraction is performed as a conventional back-mix, whereby the windings of the worm conveyor block the free flow of liquid and consequently divide the extraction pipe into several compartments in which the material and the extractant are mixed. Thus the same effect is obtained as in connection with a series of mixers, cf, also the above referenced Chemical Engineering. The conventional worm conveyor does not provide a continuous counterstream extraction, but instead a stepwise counterstream extraction.

It turned out that a continuous counterstream extraction can be obtained in connection with decontaminating a material by means of an extractant provided a core-less worm is used instead of a conventional worm conveyor.

Core-less worm conveyors are known per se for transportation of various materials. Examples of the latter materials are solid fuels, such as straw, sawdust, chips, and bark; waste, such as sludge, cinders, household rubbish and ashes; food, such as powders including sugar, flower, coffee, and grains; as well as industrial materials, such as fertilizers.

Core-less worm conveyors are manufactured by rolling a rectangular metal bar between a pair of inclining rollers, i.e. rollers mounted on shafts at such a mutual angle that the rectangular metal bar is compressed at one of the short sides. The tensions in the metal bar resulting from the rolling cause said bar to automatically form windings. After a sufficient rolling, the helical worm can be shaped by being subjected to a tension force in the longitudinal direction of the completed spiral until said spiral has reached the desired pitch.

The twisting of the metal bar during the manufacture has the effect that the outer edge sides of the completed helical worm are inclining relative to the outer cylindrical circumference of the spiral. When such a worm is used in a tubular transporting device for the transportation of a non-homogenous, non-flowable material, such as soil including stone and sticky clays, the material automatically wedges below the inclining edge sides of the worm with the result that said worm is lifted and slides across the material. Thus material accumulates on the inner side of the tubular transporting device.

### Description of the Invention

The present invention relates to a method of continuously decontaminating a material, where the material passes through a charging sluice into a closed system, is extracted counterstream by means of an extractant in an extraction section including one or more extraction pipes provided with worm conveyors, is subjected to a steam stripping in a steam stripping section for removal of the extractant, and leaves the closed system through a discharging sluice, said method being characterised in that core-less worms are used for conveying the material, which core-less worms are coated on their edges and/or the side conveying/facing the material with wear-resisting or friction reducing surface coatings.

It is advantageous especially for the extraction pipes that the above steps are performed by means of core-less worms, a flow pattern for the extraction fluid thereby being obtained which is almost identical with the ideal plug flow. The flow pattern results from the fluid not being blocked by soil and core, but instead can flow freely between the individual windings of the worm in the entire length of the extraction pipe. Such a flow pattern is not allowed by the conventional worms with a fixed core.

In the above DE-PS No. 36 10 113 Wächter and Roland suggest the use of a worm conveyor, where the windings of the worm are provided with bores so as to ensure a passage of fluid. The latter bores are, however, of a small diameter, cf. Fig. 1 of said publication, from which it appears that the extraction fluid is fed as a jet falling towards the bottom of the extraction pipe. In other words, the fluid is only used at the bottom portion of the extraction pipe. Unlike the known method, the method according to the invention ensures a complete filling of the extraction pipe with extractant, said complete filling in turn ensuring the approximated plug flow which is not achieved when the method suggested in DE-PS No. 36 10 113 is used.

Advantages are also obtained by the use of core-less worms according to the invention in connection with transportation of the material during the remaining steps of the method.

Thus a corresponding counterstream principle is ensured during the steam stripping, where steam is fed under a relieving pressure p₁ adjacent the discharging sluice sluicing out the decontaminated material, whereas the extractant is removed together with water under a condensing pressure p₂ at an early stage in the steam stripping section, when seen in the flow direction of the material, said condensing pressure being lower than the relieving pressure p₁ . Here it is also possible to ensure that the steam flows almost like the theoretical plug flow with the effect that the extractant expelled during the steam stripping does not flow in the wrong direction, i.e. in the moving direction of the material, but instead is forced towards the outlet for extractant and water.

The core-less worm presents also advantages when mounted in a drain pipe, which is coupled between the extraction section and the steam stripping section. The core-less worm allows the extractant to follow a suitable passage, whereby it can return freely to the extraction section.

Finally, the core-less worms ensure advantages in the charging sluice and the discharging sluice, where they provide a good passage for large particles, such as stones. In addition it turned out that the above charging and discharging sluices are adjustable in such a manner that the material automatically forms a sealing plug providing the desired sluicing effect.

It is not obvious to a person skilled in the art that a core-less worm can handle transportation of a non-specified material likely to contain large amounts of stones together with humus and clay. It turned out, however, that such core-less worms can operate excellently even in connection with the above particularly difficult type of material provided said core-less worms on the side facing the contaminated material are provided with an edge rail at the outer side of the windings, said edge rail being made of wear-resisting material.

As mentioned, a particular advantage is obtained by the extractant passing the extraction pipes in a flow pattern approximating a plug flow. In this manner it is ensured that the extraction can be considered a continuous counterstream extraction also in practice.

In order to ensure an efficient steam stripping, said steam stripping is advantageously performed in a steam stripping section including one or more heated steam stripping pipes interconnected in series and comprising core-less worm conveyors.

A particular advantage is obtained by performing the steam stripping such that steam is fed on a location in the closed system where the material leaves the last steam stripping pipe immediately before the discharging sluice, and such that extractant is removed together with water and/or steam on a previous location, when seen in the flow direction of the material.

The feeding of steam is advantageously controlled as a function of the pressure p₁ at the material outlet of the last steam stripping pipe and as a function of the pressure p₂ at the outlet of extractant and water, said control being set to ensure that p₁ always exceeds p₂. In this manner it is ensured that the steam moves opposite the material in form of a flow approximating a plug flow.

The draining of the major portion of the extractant prior to the steam stripping is advantageously carried out such that after the extraction and before the steam stripping the material is carried upwards through an inclining drain pipe coupled in the closed system and comprising core-less worms.

In order to prevent extractant from escaping from the assembly used, the material is advantageously charged and discharged in such a manner that said material is sluiced through a charging sluice and a discharging sluice comprising their respective pipe with a core-less worm, said core-less worm being axially mounted and set at such a speed that the material passes the above pipes while forming a sealing plug.

The invention relates furthermore to an assembly to be used for carrying out the method according to claim 1 and in form of a closed system comprising a charging sluice, an extracting section with one or more extraction pipes provided with worm conveyors, a steam stripping section, and a discharging sluice, characterized in that one or more of the worm conveyors of the assembly are core-less worm conveyors, which core-less worms are coated on their edges and/or the side conveying/facing the material with wear-resisting or friction surface coating.

In order to ensure a smooth passage of the material through the assembly it is advantageous in particular in connection with a non-flowable material when the core-less worm or worms on the side facing the contaminated material is/are provided with an edge rail of wear-resisting material at the outer side of the windings.

For the removal of the major portion of the extractant prior to the steam stripping, the assembly is advantageously provided with a drain pipe between the extraction section and the steam stripping section, said drain pipe carrying the material upwards.

In order to ensure a good sluicing of the material, the charging sluice and the discharging sluice comprise advantageously their respective pipe section with a core-less worm. The latter worms can be adjusted to form a plug of the material in such a manner that said plug constitutes a sealing preventing extractant from escaping to the environment.

The scope of the applicability of the invention appears from the following detailed explanation.

### Detailed Description of the Invention

According to a simplified embodiment of the method according to the invention, the following procedure is followed:
a) the contaminated material is continuously fed to a closed system through a charging sluice,
b) the material passes an extraction section including an extraction pipe with a core-less worm, said worm carrying the material counterstream to an extractant under controlled conditions so as to ensure a flow pattern approximating a plug flow,
c) the extractant is removed by carrying the extracted material through a steam stripping section including a heated steam stripping pipe, in which the material is carried counterstream to the steam by means of a core-less worm conveyor, said steam being fed at a relieving pressure p₁, a portion of extractant and water being removed from the steam stripping section at a point upstream in the material flow to the steam inlet and at a condensing pressure p₂, where said condensing pressure p₂ is kept lower than p₁, and
d) the decontaminated material is removed from the closed system through a discharging sluice.

A drain pipe with a core-less worm conveyor is usually coupled between the extraction section and the steam stripping section, said drain pipe carrying the material upwards with the result that a substantial portion of the co-flowing extractant is drained off from the extracted material.

When carrying out the method according to the invention, step b) is, however, usually carried out by means of an extraction section including several extraction pipes coupled in series, in parallel or as a combination thereof. Correspondingly, step c) is usually carried out by means of a steam stripping section including several steam stripping pipes, which can also be coupled in series, in parallel or as a combination thereof.

Further details of a preferred embodiment of the method according to the invetnion are indicated below.

### a) Sluicing in of the contaminated material

The contaminated material, such as soil or drilling mud, is placed in a hopper above a worm conveyor, preferably a core-less worm conveyor, carrying the material into a pipe section. The feeding of the material and the speed of the worm conveyor are adjusted in such a manner that said material forms a plug. To ensure the formation of a plug, the worm is shorter than the pipe section and ends at a point spaced from the pipe outlet. The plug is pushed forwards by means of the worm at a linear speed adjusted such that the speed of diffusion of steams of the extractant used through the plug of soil is lower than the moving speed of the plug. Such an adjustment of the feeding speed prevents extractant vapours from escaping to the environment. An additional security is obtained by also injecting steam into the plug of soil with the result that a blocking membrane of steam is formed.

The charging sluice opens on to a down pipe in which the material falls down into the succeeding extraction section. A pulverizing means is advantageously mounted for instance opposite the opening of the charging sluice into the down pipe. The pulverizing means resembles a corkscrew and pulverizes the plug of material so as to ensure that the following extraction is efficently carried out. Such a pulverizing means is particularly advantageous in connection with decontaminating clay materials. A water phase is usually formed in the down pipe due to the humidity of the charged material. When the succeeding extraction process uses an extractant of a specific gravity higher than the one of water, a blocking zone of water phase is formed in the down pipe, said water phase floating on the extractant. The blocking zone provides a supplementary prevention that extractant does not escape through the charging sluice. It is, of course, a condition that the extractant is water-immiscible.

The pipe section of the charging sluice with core-less worms is preferably of a smaller dimension than the succeeding pipe sections with core-less worm conveyors of the extraction section, the drain pipe, the steam stripping section, and the discharging sluice. As a result, large stones or foreign bodies, such as a spanner possibly blocking the core-less worms, block the system already in the charging sluice and cannot consequently come in contact with the remaining sections of the assembly used, in which a possible blocking would be difficult to remove because it would then be necessary to stop the entire assembly.

### b) Extraction

The extraction is performed in an extraction section including one or more extraction pipes usually coupled in series. The extraction pipes can be situated so as to incline in such a manner that the material leaving the first extraction pipe can fall by way of gravity into the inlet end of the succeeding extraction pipe. The extraction pipe is provided with a core-less worm conveyor capable of transporting the material counterstream to the extractant. The feeding speed of the material into the extraction section and the speed of the worm conveyor are adjusted in such a manner that the extraction pipe achieves a degree of filling of maximum 40% of material, especially between 20 and 40%. By coupling the extraction pipes in series, the extractant is usually fed at the material outlet of the last extraction pipe. The extractant is fed at such a speed that said extractant fills out the extraction pipe and is carried forwards as a plug, i.e. in such a manner that an approximated plug flow is achieved. The approximation to the plug flow is allowed by the use of a core-less worm.

The use of a core-less worm also allows steady flow conditions, and in addition it is ensured that large particles, such as stones, can pass without damaging the worm conveyor. Accordingly, it is not necessary to perform a sorting out into various sizes, because it is only necessary to separate the largest particles, such as stones of a diameter exceeding the winding distance of the worm, such as of the magnitude 80 mm or more.

Examples of suitable extractants of a higher specific gravity than water comprise carbodisulphide and halogenated hydrocarbons, such as methylene chloride.

In order to achieve the desired degree of purity, the extraction is as previously mentioned advantageously carried out by means of a higher or lower number of extraction pipes. For practical reasons, the extraction pipes are inclining a few degrees, such as 6°, whereby the material treated is discharged on a level slighly above the inlet end of the extraction pipes. Thus it is possible in a simple manner to allow the material to fall from one extraction pipe to the inlet end of the succeeding extraction pipe with the result that additional conveyor means are not necessary for carrying the material from one extraction pipe to the succeeding pipe. In practice, the necessary number of extraction pipes can be built into a mobile unit. It is also possible to design the individual extraction pipes so as to be interconnected in such a manner that a system can be established on site with the number of extraction pipes necessary for meeting the demand on site.

The extractant is fed into each extraction pipe at the top and leaves said pipe at the bottom thereof. In practice, it is possible to design a system in such a manner that the extractant can be carried in series, in parallel or as a combination thereof through each individual extraction pipe. Accordingly, it is possible to optimize the extraction process in response to the material in question, in response to the contamination in question, and in response to the necessary degree of decontamination.

### c) Steam Stripping

Prior to the steam stripping, the material leaving the last extraction pipe is advantageously carried upwards through a drain pipe carrying said material upwards above the level of the extractant with the result that fluid is drained off. The drain pipe is usually built into the same container unit as the extraction pipes. The outlet of the drain pipe is placed such that the material freed of fluid can fall by way of gravity downwards into the succeeding container unit so as to be subjected to the steam stripping. The drain pipe of such an embodiment can in practice present a rise of 10 to 30° .

During the steam stripping, the material is continuously freed of residues of extractant. The steam stripping is performed in one or more steam stripping pipes, each steam stripping pipe being shaped as a pipe with a core-less worm conveyor like the one used in the extraction pipes and the drain pipe. The steam stripping pipes are furthermore provided with a steam heating jacket with the effect that a temperature of 60 to 130°C can be kept inside said steam stripping pipe. During the stripping, the material is carried counterstream to the steam injected into the steam stripping pipe at the material outlet, i.e. immediately before the discharging sluice. During the heating by way of the steam heating jacket, the injection of steam results in an azeotropic distillation, whereby the extractant and possible, contaminating residues are removed. The azeotropic steam distillation results in a lowering of the boiling point of the extractant, whereby the thermal effect on the extractant is reduced.

The expelled extractant is removed from the steam stripping section together with water and/or steam at an outlet kept under a condensing pressure p₂. The steam stripping is controlled by an adjustment of the injected steam in response to said condensing pressure p₂ and the relieving pressure p₁ in the steam injection area of the steam stripping section, i.e. adjacent the discharging sluice.

The control is performed in such a manner that p₁ always exceeds p₂. The control ensures that the steam and the following extractant move through the steam stripping section under conditions approximating a plug flow, whereby extractant is prevented from escaping through the discharging sluice.

### d) Discharging

After the steam stripping, the decontaminated material is discharged through a discharging sluice structured like the charging sluice. The material falls down through a down pipe into a pipe section with a worm conveyor, preferably a core-less worm conveyor, whereby a plug of said material is formed. The plug blocks the steam in such a manner that a too high loss of heat is avoided at the discharging. The discharged material is now in a dry or slightly humid state and completely freed of extractant. Furthermore, the discharged material has been effectively decontaminated and can be returned to its original place of excavation.

In order to ensure formation of the plug, the pipe section of the discharging sluice is preferably inclining such that the plug of material can be pushed upwards. As the discharged material can possess very varying rheological properties and accordingly can vary from flowable sand to very adhesive clay, the consistency of which changes in response to the humidity, it is advantageous to ensure formation of the plug by including a disk of a diameter slightly smaller than the inner diameter of the pipe section, said disk being pressed under a constant load against and into the opening of the pipe section. Similar to the charging sluice, the worm of the discharging sluice ends with a space from the outlet opening.

### Regeneration of Extractant

The extractant used can be regenerated as described in Danish printed accepted application No. 161,670. Thus it is possible to pass the extractant through a separator in which the extractant is separated from co-flowing water. It is also possible to perform a complete regeneration of the extractant by way of a distillation, where an azeotropic gas is separated and cooled in a cooler and conveyed to an additional separator separating water. After the separation of water, the extractant is pure and can be re-used. The water separated during the latter processes can together with the condensed steam from the steam stripping be introduced in the distilling unit, in which it is evaporated into a concentrated emulsion of contaminated components in water. The emulsion contains a suitable amount of water and accordingly it is suited for incineration in an incinerator while utilizing the incineration energy of the contaminated components.

The core-less worm conveyors used for the transportation of the material are advantageously provided with an edge rail of wear-resisting material on the side facing the material to be transported. The edges and/or the side of the conveyor conveying/facing the material are coated with a wear-resisting or friction-reducing surface coating. The surface coating comprises optionally a hardening of the surface. Alternatively, the surface coating is a coating of PTFE, wolfram carbide or molybdenum sprayed thereon. The coating on the edge can also be a replaceable edge rail. The edge rail is usually narrow compared to the windings of the worm and is secured to said windings of the worm in such a manner that a substantial portion of the weight of the worm is transferred to the surrounding pipe through the edge rail. As a result, the edge rail is pressed against the surface therebelow by a substantial portion of the weight of the worm, which ensures that the material is pushed forwards when the worm is rotating.

The edge rail may be mounted on the worm by way of welding, screwing or in another conventional manner. The edge rail can be constituted by small lengths or one length, such as one prepared by pressing between inclining rollers according to the principle used by the preparation of the worm conveyor.

In practice, the edge rail is designed such that it is easily replaceable when worn.

### Brief Description of the Drawing

The invention is described in greater detail below with reference to the accompanying drawing, in which
Fig. 1 is a diagrammatic view of an assembly to be used for carrying out the method according to the invention,
Fig. 2 is a diagrammatic view of an embodiment of an extraction section including four extraction pipes and a drain pipe,
Fig. 3 is a diagrammatic view of an embodiment of a steam stripping section to be used in combination with the extraction section of Fig. 2,
Fig. 4 illustrates how an approximated plug flow can be obtained in an extraction pipe with a core-less worm,
Fig. 5 illustrates correspondingly how a stepwise and less efficient counterstream extraction can be obtained by means of a conventional worm with a fixed core,
Fig. 6 is a cross-sectional view through the extraction pipe of Fig. 4 and taken along the line VI-VI, and
Fig. 7 is a sectional view taken along the line VII-VII of Fig. 6 through the lower portion of a winding of a core-less worm provided with an edge rail.

### Description of the Preferred Embodiments of the Invention

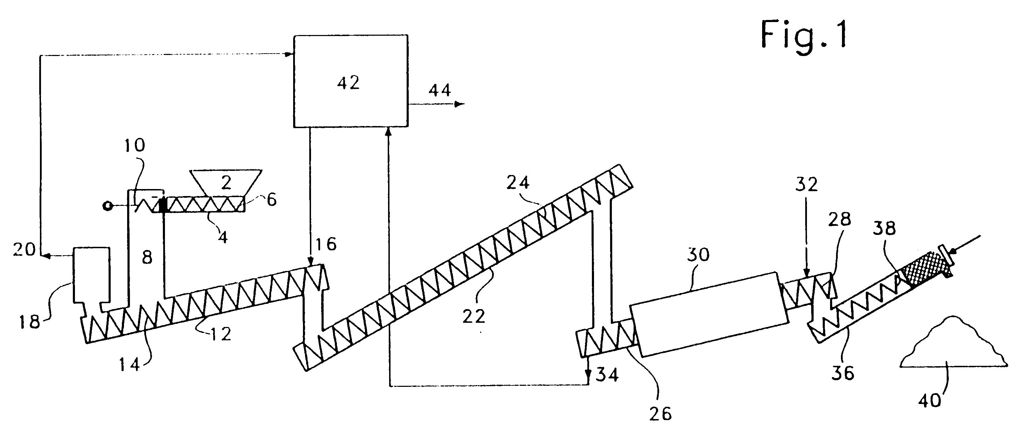

Contaminated material, such as contaminated soil or drilling mud, can be decontaminated by means of the assembly diagrammatically shown in Fig. 1. The contaminated material is introduced through a hopper 2 to a charging sluice pipe 4, wherein a core-less worm conveyor 6 is placed. The worm conveyor 6 carries the material to a down pipe 8. A corkscrew-like pulverizing means 10 is placed opposite the worm conveyor. The down pipe 8 opens onto an extraction pipe 12 containing a core-less worm conveyor 14 and inclining slightly upwards when seen in the moving direction. The worm conveyor 14 carries the soil upwards counterstream to an extractant which is introduced at the upper end at 16 of the extraction pipe. A particle separator 18 is mounted on the top side of the extraction pipe 12 at the lower end thereof. The extractant flows slowly upwards inside the particle separator at such a slow speed that fine particles are separated by way of a gravimetric sedimentation. The extractant free of particles is subsequently removed at 20.

After the extraction, the purified material falls from the upper end of the extraction pipe 12 through a pipe and down into the lower end of a drain pipe 22 provided with a core-less worm conveyor 24. The inclination of the drain pipe 22 is such that a sufficient difference in level is ensured between the inlet end and the outlet end, where the material is subjected to a draining off so as to remove co-flowing extractant.

From the top of the drain pipe 24, the drained material falls through a pipe into the lower end of a steam stripping pipe 26 provided with a core-less worm conveyor 28 and a steam jacket 30. Inside the steam stripping pipe, the material is carried counterstream to the steam injected at the end at 32 of the steam stripping pipe. The material is heated by means of the steam jacket 30 inside the steam stripping pipe in such a manner that a gaseous mixture of steam and residues of extractant can be removed at 34.

From the upper end of the steam stripping pipe 26, the purified material falls through a pipe into a discharging sluice pipe 36, which by means of a worm conveyor 38 carries said material forwards in form of a steam-blocking plug with the result that a steam lock or sluice is formed.

The purified material 40 leaves the discharging sluice pipe 36 and is now free of both contaminated material and extractant. When the material is soil, the decontaminated material can now be returned to the original place of excavation.

When the material is drilling mud including mineral material or rock drilled out, it presents such a degree of purity that it can often be dumped at sea.

The used extractant removed at 20 can be transferred to a regeneration unit 42, in which it is freed of contaminants and water by way of azeotropic distillation followed by cooling and removal of water in a distilling unit. The steam removed at 34 contains both extractant residues and contaminating materials, and said steam can also be transferred to the regeneration unit 42 so as to be subjected to a process together with the extractant used. A concentrated remanence is removed from the regeneration unit 42 at 44. The remanence is in form of an emulsion of contaminated components in water. The emulsion contains a suitable amount of water and is thus suited for incineration in an incinerator while utilizing the incineration energy of the contaminated components. The regenerator unit does not form part of the present invention, and accordingly it is not described in greater detail, which appear from Danish printed accepted application No. 161,670.

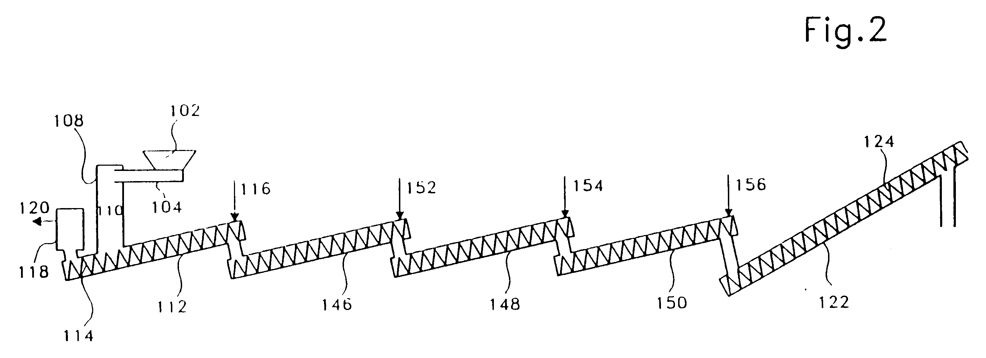

Fig. 2 is a diagrammatic view of an extraction section in form of an extraction unit, which in practice can be built into a mobile standard container. As shown in Fig. 2, such an extraction unit can comprise several extraction pipes coupled in series. Fig. 2 shows four extraction pipes 112, 146, 148 and 150. The first extraction pipe 112 is shaped like the extraction pipe 12 of Fig. 1, and the parts 102 to 120 correspond to the corresponding parts 2 to 20 of Fig. 1. The unit comprises further a drain pipe 122 shaped like the drain pipe 22 of Fig. 1 with a worm 124 corresponding to the worm 24 of Fig. 1. As illustrated in Fig. 2, the material extracted in the extraction pipe 112 falls to the lower end of the extraction pipe 146, in which it is subjected to an additional extraction. Correspondingly, the material falls subsequently to the lower end of the extraction pipe 148 and then into the extraction pipe 150, whereafter it is subjected to a draining off in the drain pipe 122. Extractant can be introduced at the top of the respective extraction pipes at 116, 152, 154 and 156. According to a preferred embodiment of the invention, fresh extractant is, however, only introduced at the last extraction pipe 150, i.e. at 156, whereby all the inlets 116, 152 and 154 are closed. In this embodiment, the extractant leaving the extraction pipe 150 is introduced in the succeeding extraction pipe 148 etc. Like the extraction pipe 112, the extraction pipes 146, 148 and 150 can be provided with their respective particle separator with an outlet for the extractant (not shown) free of particles. In this manner it is possible to introduce fresh extractant in each extraction pipe. In addition, it is possible to interconnect the extraction pipes in parallel with the result that the extraction unit can possess a higher capacity calculated as the amount of decontaminated material per time unit in such cases where it is sufficient to pass the material through only one extraction pipe in order to remove the contaminants.

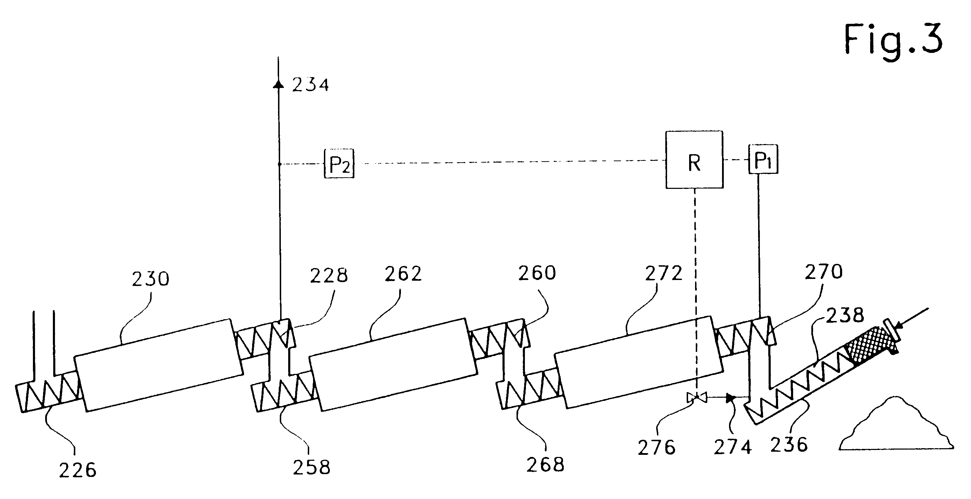

Fig. 3 is a diagrammatic view of a steam stripping section in form of a steam stripping unit. Such a unit can be structured so as to be built into a mobile standard container. In the illustrated embodiment, the unit comprises three steam stripping pipes 226, 258 and 268 coupled in series. The steam stripping pipe 226 is shaped like the steam stripping pipe 26 of Fig. 1, and the parts 226 to 230 correspond to the parts 26 to 30 of Fig. 1. Correspondingly, the discharging sluice 236 and the worm 238 are shaped like the corresponding parts 36 and 38 of Fig. 1. The material steam stripped in the steam stripping pipe 226 continues to the lower end of the steam stripping pipe 258 and further to the steam stripping pipe 268. The steam stripping pipes 258 and 268 are provided with core-less worm conveyors 260 and 270 and steam jackets 262 and 272. The steam stripping is performed by injecting steam at 274 and by removing a fraction containing expelled extractant and water/steam at an outlet 234 The removed fraction is transferred to a regeneration unit corresponding to the regeneration unit 42 of Fig. 1. The steam stripping is controlled by means of an adjustment means 276 in turn controlled by a regulator R. The control is performed in response to the pressure p₂ in the outlet 234 and the pressure p₁ at the outlet end of the steam stripping pipe 268. The regulator ensures that the pressure p₁ always exceeds the pressure p₂ by opening and closing the control valve 276 controlling the injection of steam at 274.

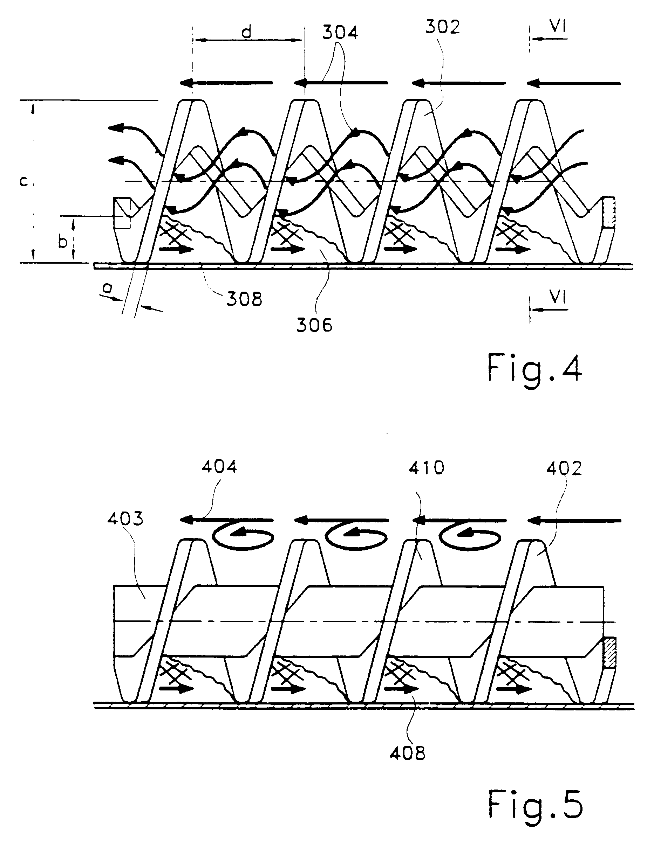

Fig. 4 illustrates the flow in an extraction pipe with a core-less worm 302. The core-less worm has a thickness a and a flange width b as well as a diameter c and a pitch d. The core-less shape of the worm ensures that the extractant flowing in the direction of the arrows 304 can flow substantially without interference of the worm, cf. the arrows. The material 306 to be decontaminated is introduced at a maximum filling degree with respect to volume of 40%. The material 306 is carried by the worm in the direction indicated by the arrow 308 while being pushed slightly upwards with the result that it is subjected to a tumbling and loosening. In this manner the ideal conditions for a counterstream extraction are ensured, whereby the extractant is not prevented from moving in the desired direction and accordingly not caused partially to flow in the opposite direction. In other words, an approximated plug flow is ensured, whereby the same extraction effect is obtained as by an endless number of mixing steps of a stepwise counterstream extraction.

Fig. 5 illustrates the corresponding situation where a conventional worm 402 with a conventional core 403 is used. The moving direction of the extractant has in Fig. 5 been indicated by an arrow 404, and the material to be decontaminated is moved in the opposite direction, cf. the arrow 408. It appears from Fig. 5, that here the extractant is carried from one relatively closed compartment to the next compartment, said extractant being blocked by the windings 410 of the worm and pressed backwards with the result that the closed compartment in practice is a mixing chamber. The material is pushed forwards in the lower portion of the extraction pipe and is only insignificantly mixed with the extractant. Accordingly, an extremely poor mixing and consequently a poor contact between the extractant and the material are achieved. The dividing into compartments results furthermore in a back mixing, whereby the extractant moves in the wrong direction, i.e. the extraction process corresponds to a stepwise counterstream extraction involving only a few number of steps. In practice the number of steps corresponds to the number of compartments between the windings of the worm. Furthermore, the poor mixing results in an even poorer extraction efficiency compared to the one achieved by a complete mixing in each mixing step.

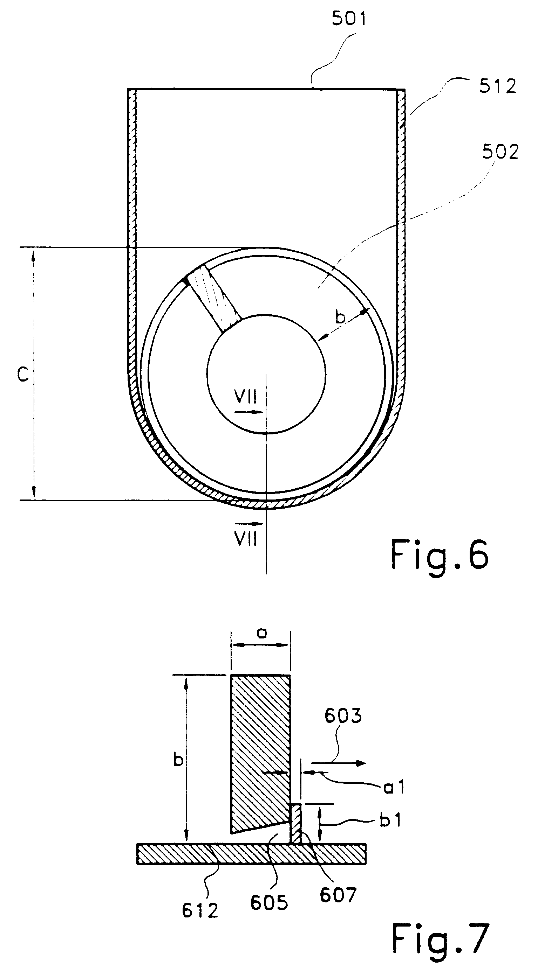

Fig. 6 is a cross-sectional view of the extraction pipe 512 of Fig. 4 taken along the line VI-VI of Fig. 4. The Figure shows a worm 502 of a diameter c and a flange width b. The pipe is formed as a casing with a cylindrical lower portion supporting the worm 502. A free space 501 is optionally present above the cylindrical portion, said free space being completely filled with extractant during the extraction. The material to be decontaminated is introduced into the worm in such a manner that it fills maximum 40% of the diameter c of said worm.

Fig. 7 is a sectional view through the lower portion of a worm winding of a core-less worm having a thickness a and a flange width b. The worm pushes the material forwards in the direction indicated by the arrow 603 by way of rotation. The internal tensions of the worm result in a wedge-shaped opening 605 facing the material between the lower edge of the worm and the surface of the pipe, whereby the material can slide into the wedge-shaped opening.

In order to prevent the above situation, the front side of the worm is provided with an edge rail 607 of a thickness a₁ and a height b₁. The edge rail is displaced on the worm in such a manner that a substantial amount of the weight of the worm rests on the pipe above said edge rail. The edge rail ensures that the material to be decontaminated is pushed forwards by the worm without sliding into the wedge-shaped space.

When the edge rail is omitted, the material slides into the wedge-shaped space and presses the worm upwards with the result that the material is not carried in the desired direction, and the worm can become overloaded and possibly break.

The invention is illustrated in greater detail below by way of some Examples.

### Example 1

The present Examples illustrates an embodiment of the invention in form of a method and an assembly for processing approximately 10 ton of soil per hour. The assembly is constituted by units as described in connection with Figs. 2 and 3.

The pipe section of the charging sluice is provided with a worm of a diameter of 200 to 300 mm. The worm has a pitch of 150 to 200 mm. The flange width b of the worm is usually 50 to 80 mm, whereas the worm has a thickness a of 25 to 30 mm. The worm is provided with an edge rail of hardened, wear-resisting steel, cf. Fig. 7, of a thickness a₁ of 3 to 6 mm and a height b₁ of 10 to 20 mm. The speed of the worm can be adjusted to be 10 to 40 rpm and is usually set at 20 to 25 rpm. The remaining worms, i.e. the worms in the extraction pipes, the drain pipe, the steam stripping pipes and the pipe section of the discharging sluice are of an external diameter of 300 to 400 mm The worm has a pitch of 200 to 300 mm, a thickness a of 30 mm, whereas the flange width b is 60 to 80 mm. These worms are also provided with an edge rail of hardened, wear-resisting steel as indicated in Fig. 7, and in this case too the edge rail has a thickness a₁ of 3 to 6 mm and a height b₁ of 10 to 20 mm. The speed of the worm can be adjusted from 10 to 40 rpm and is usually set at 20 to 25 rpm.

The extractant is introduced at a flow rate in the extraction pipe of between 0.1 and 1.0 m/min, typically 0.5 m/min, which corresponds to approximately 5 ton of methylene chloride per hour. When it is a question of a unit including three steam stripping pipes as shown in Fig. 3, the temperature of the jackets is adjusted by the injection of steam in response to the condensing temperature, the temperature being kept at 40 to 60°C in the first steam stripping pipe 230, at 60 to 80°C in the second steam stripping pipe 262, whereas the condensing temperature is kept at 80 to 100°C from the jacket of the last steam stripping pipe 272. The pressure p₁ is kept slightly above the atmospheric pressure, such as 0.1 to 1 m of water corresponding to an absolute pressure of 1.01 to 1.1 bar. The pressure p₂ depends on the condensing conditions of steam and extractant existing in a cooler (condensate) placed immediately after the measuring location of the pressure p₂. The cooler is structured such that p₂ sets at a level slightly below the atmospheric pressure.

The above flow of extractant is used in connection with the usually contaminated soil. In case of a heavy, easily soluble contamination, such as coast sand highly contaminated by a heavy oil, a higher rate of the flow of extractant is used, such as approximately twice the above rate, i.e. from 0.2 to 2.0 m/min, typically approximately 1.0 m/min. The latter procedure is necessary because oils of the present type are dissolved instantaneously with the result that the flow of extractant would quickly be too viscous had the faster flow of extractant not been used.

### Example 2

This Example is carried out on a test assembly comprising a charging sluice and a single extraction pipe of an internal diameter of 335 mm, and tar-contaminated soil with a high degree of contamination was decontaminated by means of methylene chloride as extractant.

The contaminated soil was introduced at a rate of 10 t/h. The methylene chloride was introduced counterstream at a rate of 5 t/h.

During the testing, samples were collected 2, 3, and 8 m from the introducing location. The tar content of these samples and of the introduced contaminated soil (the starting material) appears from Table 1.

**Table 1**

| Sample | Tar content mg/kg (ppm) |
|---|---|
| Starting material | 16,300 |
| 2 m from the introduction | 4,600 |
| 3 m from the introduction | 1,420 |
| 8 m from the introduction | 260 |

It appears that by passing the soil through a single extraction pipe, the tar content went down from 16,300 mg/kg (1.63%) to 260 mg/kg (0.026%), i.e. the tar content was reduced to 1.6% compared to the original content.

### Example 3

Corresponding to the conditions stated in Example 2, a test was performed with tar-contaminated soil only slightly contaminated. The tar content of the starting material and the samples appears from Table 2.

**Table 2**

| Sample | Tar content mg/kg (ppm) |
|---|---|
| Starting material | 540 |
| 2 m from the introduction | 280 |
| 8 m from the introduction | 85 |

It appears from Examples 1 and 2 that the use of two extraction pipes can reduce a tar content of 16,300 mg/kg to a remaining content of less than 100 mg/kg (= 100 ppm).

By means of an assembly comprising four succeeding extraction pipes, it is possible to decontaminate tar-contaminated soil of a contamination degree of 16,300 mg/kg to a tar content meeting the requirements presented to clean soil, i.e. less than 10 ppm.

### Example 4

Tar-contaminated soil is decontaminated by passing four extraction pipes of the extraction unit of Fig. 2 and by means of methylene chloride as extractant. Subsequently, the soil is drained, whereafter it is stripped by means of steam by passing three steam stripping pipes of the steam stripping unit of Fig. 3. The decontaminated soil removed from the discharging sluice presents a methylene chloride content below the detecting limit, i.e. 1 ppm, and accordingly the soil can be returned to its original place of excavation without presenting a risk to the environment.

## Claims

1. A method of continuously decontaminating a material, where said material
a) passes a charging sluice to a closed system,
b) is extracted counterstream by means of an extractant in an extraction section including one or more extraction pipes provided with worm conveyors,
c) is subjected to a steam stripping in a steam stripping section for removal of the extractant, and
d) leaves the closed system through a discharging sluice, **characterized** in that core-less worms are used for conveying the material, which core-less worms are coated on their edges and/or the side conveying/facing the material with a wear-resisting or friction reducing surface coating.

2. A method as claimed in claim 1, **characterized** in that said wear-resisting or friction reducing surface coating comprises a hardening of the surface.

3. A method as claimed in claim 1, **characterized** in that said wear-resisting or friction reducing surface coating is a surface coating of PTFE, wolfram carbide or molybdenum.

4. A method as claimed in claim 1, **characterized** in that said wear-resisting or friction reducing surface coating is a replaceable edge rail.

5. A method as claimed in claim 1, **characterized** in that the extractant passes through the extraction pipes as an approximated plug flow.

6. A method as claimed in claim 1, **characterized** in that the steam stripping is performed in a steam stripping section including one or more heated steam stripping pipes interconnected in series and comprising core-less worm conveyors.

7. A method as claimed in claim 6, **characterized** in that the steam stripping is performed by feeding steam into the closed system on a location where the material leaves the last steam stripping pipe immediately before the discharging sluice and by removing the extractant together with water/steam at a previous location, when seen in the flow direction of the material.

8. A method as claimed in claim 7, **characterized** in that the feeding of steam is controlled as a function of the pressure p1 at the leaving end of the last steam stripping pipe and as a function of the pressure p2 at the location where extractant and water/steam is removed, said control being pre-set so as to ensure that p1 exceeds p2.

9. A method as claimed in claim 1, **characterized** in that after the extraction and before the steam stripping the material is carried upwards through an inclining drain pipe coupled in the closed system and comprising core-less worms.

10. A method as claimed in claim 1, **characterized** in that the charging sluice and the discharging sluice comprise their respective pipe with a core-less worm, and that the material passes the latter pipes while forming a sealing plug.

11. An assembly to be used for carrying out the method according to claim 1 and in form of a closed system comprising a charging sluice (4, 6), an extracting section with one or more extraction pipes (12) provided with worm conveyors (14), a steam stripping section (26, 28, 30), and a discharging sluice (36, 38), **characterized** in that one or more of the worm conveyors (6, 14, 24, 28, 38) of the assembly are core-less worm conveyors, which core-less worms are coated on their edges and/or the side conveying/facing the material with a wear-resisting or friction reducing surface coating.

12. An assembly as claimed in claim 11, **characterized** in that said wear-resisting or friction reducing surface coating comprises a hardening of the surface.

13. An assembly as claimed in claim 11, **characterized** in that said wear-resisting or friction reducing surface coating is a surface coating of PTFE, wolfram carbide or molybdenum.

14. An assembly as claimed in claim 11, **characterized** in that said wear-resisting or friction reducing surface coating is a replaceable edge rail (607).

15. An assembly as claimed in claim 11, **characterized** in that it comprises a drain pipe (22) between the extraction section and the steam stripping section, said drain pipe comprising means (24) for carrying the material upwards.

16. An assembly as claimed in claim 11, **characterized** in that the charging sluice (4, 6) and the discharging sluice (36, 38) comprise their respective pipe section (4, 36) with a core-less worm (6, 38).

## Patentansprüche

1. Verfahren zur kontinuierlichen Dekontaminierung eines Materials, wobei dieses Material
a) eine Chargierschleuse zu einem geschlossenen System passiert,
b) im Gegenstrom mit einem Extraktionsmittel in einem Extraktionsabschnitt, welcher einen oder mehrere mit Schneckenförderern versehene Extraktionsrohre aufweist, extrahiert wird,
c) einem Dampfstrippen in einem Dampfstrippabschnitt zur Entfernung des Extraktionsmittels unterzogen wird, und
d) das geschlossene System durch eine Austragsschleuse verläßt, dadurch gekennzeichnet, daß kernlose Schnecken zur Förderung des Materials verwendet werden, welche kernlosen Schnecken an ihren Rändern und/oder an der das Material fördernden bzw. diesem zugewandten Seite mit einer verschleißfesten oder reibungsmindernden Oberflächenbeschichtung überzogen sind.

2. Verfahren nach Anspruch 1, dadurch gekennzeichnet, daß die verschleißfeste oder reibungsmindernde Oberflächenbeschichtung eine Härtung der Oberfläche mit einschließt.

3. Verfahren nach Anspruch 1, dadurch gekennzeichnet, daß die verschleißfeste oder reibungsmindernde Oberflächenbeschichtung eine Oberflächenbeschichtung aus PTFE, Wolframcarbid oder Molybdän ist.

4. Verfahren nach Anspruch 1, dadurch gekennzeichnet, daß die verschleißfeste oder reibungsmindernde Oberflächenbeschichtung eine ersetzbare Randschiene ist.

5. Verfahren nach Anspruch 1, dadurch gekennzeichnet, daß das Extraktionsmittel die Extraktionsrohre in annähernd idealer Strömung passiert.

6. Verfahren nach Anspruch 1, dadurch gekennzeichnet, daß das Dampfstrippen in einem Dampfstrippabschnitt durchgeführt wird, welcher ein oder mehrere beheizte Dampfstripprohre umfaßt, welche in Serie geschaltet sind und kernlose Schneckenförderer aufweisen.

7. Verfahren nach Anspruch 6, dadurch gekennzeichnet, daß das Dampfstrippen erfolgt, indem Dampf in das geschlossene System an einer Stelle eingeleitet wird, an welcher das Material das letzte Dampfstripprohr verläßt, unmittelbar vor der Austragsschleuse, und indem das Extraktionsmittel zusammen mit Wasser/Dampf an einer früheren Stelle, in Fließrichtung des Materials gesehen, entfernt wird.

8. Verfahren nach Anspruch 7, dadurch gekennzeichnet, daß das Einleiten von Dampf als Funktion des Druckes p1 am Austrittsende des letzten Dampfstripprohres und als eine Funktion des Druckes p2 an der Stelle, an welcher Extraktionsmittel und Wasser/Dampf entfernt wird, gesteuert wird, wobei diese Steuerung voreingestellt wird, um zu gewährleisten, daß p1 größer ist als p2.

9. Verfahren nach Anspruch 1, dadurch gekennzeichnet, daß das Material nach der Extraktion und vor dem Dampfstrippen durch ein geneigtes Abzugsrohr, das in das geschlossene System eingekoppelt ist und kernlose Schnecken aufweist, aufwärts geführt wird.

10. Verfahren nach Anspruch 1, dadurch gekennzeichnet, daß die Chargierschleuse und die Austragsschleuse jeweils ein eigenes Rohr mit einer kernlosen Schnecke aufweisen und daß das Material letztere Rohre unter Bildung eines dichtenden Stopfens passiert.

11. Vorrichtung zur Verwendung zur Durchführung des Verfahrens nach Anspruch 1 und in Form eines geschlossenen Systems mit einer Chargierschleuse (4, 6), einem Extraktionsabschnitt mit einem oder mehreren, mit Schneckenförderern (14) versehenen Extraktionsrohren (12), einem Dampfstrippabschnitt (26, 28, 30) und einer Austragsschleuse (36, 38), dadurch gekennzeichnet, daß ein oder mehrere Schneckenförderer (6, 14, 24, 28, 38) der Vorrichtung kernlose Schneckenförderer sind, wobei die kernlosen Schnecken an ihren Rändern und/oder ihrer das Material fördernden bzw. diesem zugewandten Seite mit einer verschleißfesten oder reibungsmindernden Oberflächenbeschichtung überzogen sind.

12. Vorrichtung nach Anspruch 11, dadurch gekennzeichnet, daß die verschleißfeste oder reibungsmindernde Oberflächenbeschichtung ein Härten der Oberfläche mit einschließt.

13. Vorrichtung nach Anspruch 11, dadurch gekennzeichnet, daß die verschleißfeste oder reibungsmindernde Oberflächenbeschichtung eine Oberflächenbeschichtung aus PTFE, Wolframcarbid oder Molybdän ist.

14. Vorrichtung nach Anspruch 11, dadurch gekennzeichnet, daß die verschleißfeste oder reibungsmindernde Oberflächenbeschichtung eine ersetzbare Randschiene (607) ist.

15. Vorrichtung nach Anspruch 11, dadurch gekennzeichnet, daß sie ein Abzugsrohr (22) zwischen dem Extraktionsabschnitt und dem Dampfstrippabschnitt umfaßt, wobei das Abzugsrohr Mittel (24) zum Aufwärtsführen des Materials aufweist.

16. Vorrichtung nach Anspruch 11, dadurch gekennzeichnet, daß die Chargierschleuse (4, 6) und die Austragsschleuse (36, 38) jeweils einen eigenen Rohrabschnitt (4, 36) mit einer kernlosen Schnecke (6, 38) aufweisen.

## Revendications

1. Procédé pour décontaminer en continu un matériau, procédé dans lequel ledit matériau
a) passe à travers un canal de chargement jusqu'à un système clos,
b) est extrait à contre-courant au moyen d'un agent d'extraction dans une section d'extraction comportant un ou plusieurs tuyaux d'extraction munis d'un convoyeur à vis sans fin,
c) est soumis à un entraînement à la vapeur dans une section d'entraînement à la vapeur pour en retirer l'agent d'extraction, et
d) quitte le système clos par un canal de déchargement, caractérisé en ce que des vis sans tige centrale sont utilisées pour convoyer le matériau, lesdites vis sans tige centrale étant recouvertes sur leurs arêtes et/ou sur côté face convoyant le matériau et faisant face à celui-ci, avec un revêtement de surface réduisant les frictions ou résistant à l'usure.

2. Procédé selon la revendication 1, caractérisé en ce que ledit revêtement de surface réduisant les frictions ou résistant à l'usure est obtenu par durcissement de la surface.

3. Procédé selon la revendication 1, caractérisé en ce que ledit revêtement de surface réduisant les frictions ou résistant à l'usure est un revêtement de surface en polytétrafluoréthylène, en carbure de tungstène ou en molybdène.

4. Procédé selon la revendication 1, caractérisé en ce que ledit revêtement de surface réduisant les frictions ou résistant à l'usure est une languette disposée sur l'arête et pouvant être remplacée.

5. Procédé selon la revendication 1, caractérisé en ce que ledit agent d'extraction parcourt les tuyaux d'extraction en ayant approximativement un écoulement piston.

6. Procédé selon la revendication 1, caractérisé en ce que l'entraînement à la vapeur est réalisé dans une section d'entraînement à la vapeur comportant un ou plusieurs tuyaux d'entraînement à la vapeur chauffés, interconnectés en série et comportant un convoyeur à vis sans tige centrale.

7. Procédé selon la revendication 6, caractérisé en ce que l'entraînement à la vapeur est réalisé en introduisant de la vapeur dans le système clos à un endroit où le matériau quitte le dernier tuyau d'entraînement à la vapeur, immédiatement avant le canal de déchargement et en éliminant l'agent d'extraction avec un mélange eau/vapeur à un endroit antérieur, vu dans la direction d'écoulement du matériau.

8. Procédé selon la revendication 7, caractérisé en ce que l'alimentation en vapeur est réglée en fonction de la pression p1 à l'extrémité de sortie du dernier tuyau d'entraînement à la vapeur et en fonction de la pression p2 à l'endroit où l'agent d'extraction et le mélange eau/vapeur, est retiré, ledit réglage étant prédéterminé de façon à garantir que p1 soit supérieur à p2.

9. Procédé selon la revendication 1, caractérisé en ce que, après l'extraction et avant l'entraînement à la vapeur, le matériau est transporté vers le haut par un tuyau d'évacuation incliné, disposé dans le système clos et comportant des vis sans tige centrale.

10. Procédé selon la revendication 1, caractérisé en ce que le canal de chargement et le canal de déchargement comportent leur propre tuyau à vis sans tige centrale, et en ce que le matériau parcourt les derniers tuyaux tout en formant un bouchon colmatant.

11. Installation utilisée pour mettre en oeuvre le procédé seion la revendication 1, sous forme d'un système clos, comportant un canal de chargement (4, 6), une section d'extraction comportant un ou plusieurs tuyaux d'extraction (12) munis de convoyeurs à vis sans fin (14), une section d'entraînement à la vapeur (26, 28, 30) et un canal de déchargement (36, 38), caractérisé en ce que l'un ou plusieurs des convoyeurs à vis sans fin (6, 14, 24, 28, 38) de l'installation sont des convoyeurs à vis sans tige centrale, lesdites vis sans tige centrale étant recouvertes sur leurs arêtes et/ou leur côté convoyant le matériau et faisant face à celui-ci, avec un revêtement de surface réduisant les frictions ou résistant à l'usure.

12. Installation selon la revendication 11, caractérisée en ce que ledit revêtement de surface réduisant les frictions ou résistant à l'usure est obtenu par un durcissement de la surface.

13. Installation selon la revendication 11, caractérisée en ce que ledit revêtement de surface réduisant les frictions ou résistant à l'usure est un revêtement de surface en polytétrafluoréthylène, en carbure de tungstène ou en molybdène.

14. Installation selon la revendication 11, caractérisée en ce que ledit revêtement de surface réduisant les frictions ou résistant à l'usure est une languette disposée sur l'arête et pouvant être remplacée (607).

15. Installation selon la revendication 11, caractérisée en ce qu'elle comporte un tuyau d'évacuation (22) entre la section d'extraction et la section d'entraînement à la vapeur, ledit tuyau d'évacuation comportant des moyens (24) pour transporter le matériau vers le haut.

16. Installation selon la revendication 11, caractérisée en ce que le canal de chargement (4, 6) et le canal de déchargement (36, 38) comportent leur propre section de tuyau (4, 36) munie d'une vis sans tige centrale (6, 38).
